# EUROPÄISCHE PATENTSCHRIFT

(11) **EP 0 640 407 B1**
(45) Veröffentlichungstag und Bekanntmachung des Hinweises auf die Patenterteilung: **11.12.1996**
(21) Anmeldenummer: 94112624.5
(22) Anmeldetag: 12.08.1994
(51) Int. Cl.: B05D 1/18, D21H 23/52

(54) **Verfahren zum kontinuierlichen Imprägnieren**
Process for a continuous impregnation
Procédé pour l'imprégnation continue

(30) Priorität: 31.08.1993 DE 4329218
(43) Veröffentlichungstag der Anmeldung: 01.03.1995
(73) Patentinhaber: Beiersdorf Aktiengesellschaft, D-20245 Hamburg (DE)
(72) Erfinder: Jauchen, Peter, D-22455 Hamburg (DE); Külper, Klaus, Dr., D-25421 Pinneberg (DE)

(56) Entgegenhaltungen:
- DE-B- 2 550 980
- DE-B- 2 817 062
- GB-A- 1 419 647

## Beschreibung

Die Erfindung betrifft ein Verfahren zum kontinuierlichen Imprägnieren von saugfähigen Bahnen, insbesondere von trockenen Bahnen, wie solchen aus Papier, bei dem Impregnierflüssigkeit in die Bahn gesaugt wird.

Es gibt bereits verschiedenartige solche Verfahren, die teilweise auch in der Praxis angewandt werden, etwa als Tauchimprägnierung oder Druckimprägnierung.

So beschreibt DE-A1-3.024.394 die Herstellung einer Kunststoff-Ausrüstung in einer Papiermaschine nach der Art einer Leimpressen-Imprägnierung mit einseitigem Anwischen in der Papiermaschine.

Auch die DE-A1-3.040.681 beschreibt eine Zwangsimprägnierung mittels einer Rasterwalze aus elastischem Material, das insbesondere für Papierbahnen entwickelt wurde und bei dem das Imprägniermittel in das bahnförmige Material bis zur Sättigung hineingepreßt wird (S. 12, Mitte), also nach Art einer Druckimprägnierung.

Die US-A1-4.000.343 beschreibt ein Verfahren vom Typ der Tauchimprägnierung, bei dem insbesondere Papier mit einem nicht-wäßrigen Imprägniermittel behandelt wird.

Die EP-B1-223.922 beschreibt ein Verfahren zum Imprägnieren von Papierbahnen mit Kunstharzen, wobei dem Mahlgrad des Gemisches aus Zellstoff-Fasern, dem pH-Wert des Imprägniermittels etc. besondere Bedeutung beigemessen wird, das aber im übrigen ebenfalls in der Leimpresse den Auftrag des Imprägniermittels vorsieht.

**Es ist aber bereits ein Verfahren zum kontinuierlichen Imprägnieren von saugfähigen trockenen Bahnen vorgeschlagen worden, wobei das Imprägniermittel mittels Saugen in eine Rohpapierbahn befördert wird, vgl. DE-B1-2.550.980**. Danach wird zunächst eine ausreichende Menge Imprägniermittel auf die Oberfläche der Papierbahn aufgetragen und dann diese Bahn über eine Saugzone geführt, in die das Imprägniermittel bis zur anderen Oberfläche durchgesaugt wird. Gesaugt wird dabei mittels Saugplatten, über denen ggf. ein Siebband mitläuft, insbesondere bei weniger naßfesten Papieren.

Diese bekannten Verfahren haben jedoch beträchtliche Nachteile, die ein wirtschaftliches und qualitativ gleichmäßiges Imprägnieren nicht gewährleisten. Denn es stellen sich beim Imprägnieren von saugfähigen trockenen Bahnen, insbesondere Papierbahnen, vielschichtige Probleme, die ein gleichmäßiges Imprägnieren erschweren, sowohl eine gleichmäßige Penetration als auch eine gleichmäßige Verteilung des Imprägniermittels im Substrat. Zudem muß bei den hohen geforderten Bahngeschwindigkeiten eine schnelle Penetration gewährleistet sein, bei gleichzeitiger Reproduzierbarkeit der Ergebnisse. Auch ein störungsfreies und verschleißarmes Verfahren ist zu fordern, das zudem einfach und bedienungsfreundlich sein soll.

Die Tauchimprägnierung kann diesen Anforderungen nur zum Teil genügen, ist aber hinsichtlich gleichmäßiger Penetration und Verteilung und auch Penetrations-Geschwindigkeit unzureichend. Die Druckimprägnierung erzielt zwar höhere Penetrations-Geschwindigkeiten, ist aber ebenso unzureichend hinsichtlich gleichmäßiger Penetration und Verteilung und wird zudem schwierig bei empfindlicheren und weniger naßfesten Papieren. Aber auch die Saugimprägnierung, wie sie oben beschrieben wurde, hat Nachteile, die diesen Vorschlag im Bereich des theoretischen stecken ließen. Denn zwar soll ausreichend Imprägniermittel aufgetragen werden, das dann durchzusaugen ist. Aber die Praxis zeigt, daß insbesondere in den Seitenbereichen die Gefahr besteht, Luft mit anzusaugen, wie überhaupt ein ungleichmäßig imprägniertes Papier resultiert, bei einer pflegebedürftigen und im Schnellauf bedienungsaufwendigen Verfahrensführung.

**Aufgabe der Erfindung war es, ein Verfahren zum kontinuierlichen Imprägnieren von saugfähigen, trockenen Bahnen, insbesondere solchen aus Papier, Vlies oder Geweben bereitzustellen, das die Nachteile des Standes der Technik vermeidet oder zumindest vermindert.**

Gemäß der Erfindung wird diese Aufgabe durch das Verfahren nach Anspruch 1 gelöst. Zweckmäßige Weiterbildungen der Erfindung sind in den abhängigen Ansprüchen beschrieben.

Damit wird eine Saugimprägnierung technisch realisierbar, die eine gleichmäßige Imprägnierung ergibt und damit eine bedeutsame Qualitätsverbesserung bei gleichzeitiger Einsparung an Imprägniermittel. Auch "schwierige" Rohpapiere lassen sich danach imprägnieren, mit reproduzierbaren Ergebnissen. Zudem ist das Verfahren schnell und einfach auch im Dauerbetrieb einsetzbar, dabei außerordentlich Bedienungsfreundlich und nicht störanfällig. Es ergibt eine optimale Penetrierfähigkeit der Imprägnierflüssigkeiten, die bisher nicht erreichbar schien.

Tritt die mit Wasserdampf beaufschlagte Bahn in das Bad mit Imprägnierflüssigkeit, so kondensiert der Dampf, und saugt sozusagen die Imprägnierflüssigkeit nach und in die Bahn hinein, womit sich der interne Arbeitstitel einer "Heißdampfpumpe" erklärt. Damit erfolgt die Imprägnierung, ohne aber deren Nachteile zu zeigen und ohne daß deren hervorragende Arbeitsergebnisse hätten erwartet werden können.

### Detaillierte Beschreibung

Die Imprägnieranlage besteht aus einer Abrollung, der Bahnbedampfungsstation, der Imprägnierwanne, Abquetschstation, Trockenkanal und Aufrollung. Ab- und Aufrollung, Abquetschstation sowie der als Schwebedüsenkanal ausgelegte Trockenkanal entsprechen dem Stand der Technik. Herzstück der Imprägnieranlage ist die Bahnbedampfungsstation mit nachgeschalteter Imprägnierwanne.

Als Bedampfungsstation dient ein der handelsüblichen Dämpfungsstrecke, Typ Fluidex^{R} der Firma Pagendarm, ähnliches Gerät. In dieser mit Ausnahme des Ein- und Ausgangsschlitzes geschlossenen Anlage trifft die Trägerbahn auf überhitzten Wasserdampf; es findet ein Austausch der im Träger eingeschlossenen Luft gegen Wasserdampf statt. Anfängliches Kondensieren des Wasserdampfes im Träger im Einlaufbereich stört nicht, sondern hat umgekehrt Vorteile: wenn während der Aufheizphase dieses Kondenswasser im Träger erneut verdampft, wird durch die Volumenvergößerung der Austausch Luft gegen Wasserdampf verstärkt. Vorteilhaft in diesem Sinne ist ebenfalls die Möglichkeit, die Bahn vor Eintritt in die Bedampfungsstation schon vorzufeuchten und über eine vorgelagerte Heizwalze vorzuwärmen. Ziel ist es, beim Durchlauf durch die Bedampfungsstation einen möglichst umfassenden Austausch der im Träger eingeschlossenen Luft gegen Wasserdampf vorzunehmen, der auf einem Temperaturniveau oberhalb der Kondensationstemperatur vorliegt.

In dem unmittelbar der Bedampfungsstation nachgeschalteten Imprägnierbad taucht die heiße, mit Wasserdampf gesättigte Trägerbahn ein; durch den Abkühlungsprozeß kondensiert der Wasserdampf unter erheblicher Volumenkontraktion - da das Trägermaterial in dem Imprägnierbad nur von Imprägniermittel umgeben ist, wirkt diese Volumenkontraktion wie eine "Heißdampfpumpe": es entsteht Unterdruck im Trägermaterial und daraus resultierend ein Volumenstrom des Imprägniermittels in das Trägermaterial. Die sonst bei der Tauchimprägnierung störende Luft ist hier in dem vorgelagerten Schritt mehr oder weniger vollständig ausgetauscht worden. Als Ergebnis wird ein imprägniertes Trägermaterial erhalten, welches gleichmäßiger über den Querschnitt imprägniert ist - da speziell für Anwendungen wie z.B. Malerabdeckbänder die schwächste Stelle des Trägers die Gesamtqualität bestimmt, ist eine deutliche Qualitätsverbesserung festzustellen, wenn anstelle der Standard-Tauchimprägnierung auf das Verfahren der "Heißdampfpumpe" zurückgegriffen wird.

Im folgenden soll die Erfindung anhand von Ausführungsbeispielen näher erläutert werden, ohne diese damit aber unnötig beschränken zu wollen.

### BEISPIEL 1

Als Trägermaterial wurde ein flachgekrepptes Natron-Kraftpapier der Firma Holtzmann mit einem Flächengewicht von ca. 55 g/m² und 160 µ Dicke eingesetzt, als Imprägniermittel diente eine modifizierte Acrylatdispersion (Acronal 500 D der BASF) mit einem Feststoffgehalt von 38 % bei einem mittleren Teilchendurchmesser von ca. 140 µm. Bei einer Geschwindigkeit von 10 m/min und Vorgehen wie in der "detaillierten Beschreibung" angegeben, wurde auf der Pilotanlage Material erhalten, welches deutliche Qualitätsverbesserungen aufwies. Die Festigkeitswerte sowie insbesondere die Ergebnisse aus anwendungstechnischen Prüfungen als Malerabdeckband zeigten eine signifikante Verbesserung.

### Beispiel 2

Als Träger wurde ein spezielles Clupak-Papier der Firma Thilmany eingesetzt (55 g/m², Dicke 90 - 100 µm), als Imprägniermittel ein SBR-Latex (Feststoff 38 %, mittlere Teilchengröße ca. 140 µ) der Firma Dow Chemicals.

Bei einer Geschwindigkeit von 10 m/min wurde analog Beispiel 1 auf der Pilotanlage Material erhalten, welches im Vergleich zu getauchtem Material eine erhebliche Qualitätsverbesserung erkennen ließ: bei Verwendung als Malerabdeckband spaltet getauchtes Material nach dem Überstreichen mit Dispersionsfarbe nach 5 - 10 min nahezu vollständig; das mit dem Verfahren der "Heißdampfpumpe" hergestellte Trägermaterial dagegen zeigt deutliche Qualitätsverbesserungen. Visuell ist die Reduzierung der eingeschlossenen, als Schwachstelle störenden Luft zu erkennen: normal getauchtes Material sieht weiß und undurchsichtig aus, das nach dem beschriebenen Verfahren qualitätsverbesserte dagegen opak bis transparent, ähnlich wie Pergamin.

## Patentansprüche

1. Verfahren zum kontinuierlichen Imprägnieren von saugfähigen Bahnen, insbesondere von trockenen Bahnen, wie solchen aus Papier, bei dem Imprägnierflüssigkeit in die Bahn gesaugt wird, dadurch gekennzeichnet, daß zunächst die Luft aus der Bahn mittels Wasserdampf verdrängt wird, wobei die Temperatur im Austauschbereich über der Kondensationstemperatur des Wasserdampfes in der Bahn liegt, worauf die Bahn durch ein Bad mit Imprägnierflüssigkeit geleitet wird, das eine Temperatur unterhalb der Kondensationstemperatur des Wasserdampfes in der Bahn hat.

2. Verfahren nach Anspruch 1, dadurch gekennzeichnet, daß das Bad mit Imprägnierflüssigkeit Raumtemperatur hat.

3. Verfahren nach Anspruch 1, dadurch gekennzeichnet, daß die Verdrängung der Luft durch Wasserdampf bei einer Temperatur von 80°C bis 200°C, insbesondere von 120°C bis 150°C, erfolgt.

4. Verfahren nach Anspruch 1, dadurch gekennzeichnet, daß die Bahn über eine Vorheizwalze gelenkt und auf dieser vorgeheizt wird.

5. Verfahren nach Anspruch 1, dadurch gekennzeichnet, daß die Bahn vorgefeuchtet wird, insbesondere im Bereich vor der Vorheizwalze.

6. Verfahren nach Anspruch 1, dadurch gekennzeichnet, daß anschließend ein Überschuß an Imprägnierflüssigkeit in einer Quetsch-Station beseitigt wird und ggf. in das Bad mit Imprägnierflüssigkeit zurückgeführt wird.

## Claims

1. Method for the continuous impregnation of absorbent webs, especially of dry webs, such as those made of paper, in which impregnating liquid is sucked into the web, characterized in that the air is first driven out ofthe web by means of steam, the temperature in the exchange region being above the temperature of condensation of the water in the web, whereupon the web is passed through a bath of impregnating liquid at a temperature below the temperature of condensation of the water in the web.

2. Method according to Claim 1, characterized in that the bath of impregnating liquid is at room temperature.

3. Method according to Claim 1, characterized in that the driving-out of the air is carried out by means of steam at a temperature of 80° to 200°, in particular of 120° to 150°.

4. Method according to Claim 1, characterized in that the web is steered over a preheating roll and is preheated on the latter.

5. Method according to Claim 1, characterized in that the web is pre-wetted, in particular in the region before the preheating roll.

6. Method according to Claim 1, characterized in that a surplus of impregnating liquid is subsequently removed in a squeezing station and optionally fed back into the bath of impregnating liquid.

## Revendications

1. Procédé pour l'imprégnation continue de bandes absorbantes, en particulier de bandes sèches telles que des bandes de papier, dans lequel un liquide d'imprégnation est aspiré dans la bande, caractérisé en ce que l'air est d'abord chassé hors de la bande au moyen de vapeur d'eau, dans lequel la température dans la zone de remplacement est supérieure à la température de condensation de la vapeur d'eau dans la bande, puis la bande est conduite à travers un bain contenant un liquide d'imprégnation, qui se trouve à une température inférieure à la température de condensation de la vapeur d'eau dans la bande.

2. Procédé suivant la revendication 1, caractérisé en ce que le bain contenant un liquide d'imprégnation se trouve à la température ambiante.

3. Procédé suivant la revendication 1, caractérisé en ce que le déplacement de l'air par la vapeur d'eau est réalisé à une température de 80°C à 200°C, en particulier de 120°C à 150°C.

4. Procédé suivant la revendication 1, caractérisé en ce que la bande est déviée sur un rouleau de préchauffage et est préchauffée sur celui-ci.

5. Procédé suivant la revendication 1, caractérisé en ce que la bande est préhumidifiée, en particulier dans la région précédant le rouleau de préchauffage.

6. Procédé suivant la revendication 1, caractérisé en ce qu'un excédent de liquide d'imprégnation est ensuite enlevé dans une station d'essorage et le cas échéant est renvoyé dans le bain contenant le liquide d'imprégnation.
